Europäisches Patentamt

European Patent Office

Office européen des brevets

(19)

(11) Veröffentlichungsnummer : **0 088 952**
**B1**

(12) # EUROPÄISCHE PATENTSCHRIFT

(45) Veröffentlichungstag der Patentschrift :
28.05.86

(21) Anmeldenummer : 83102063.1

(22) Anmeldetag : 03.03.83

(51) Int. Cl.⁴ : **F 04 B 21/04, F 16 J  1/12**

(54) **Verdrängerteil einer Kolbenpumpe.**

(30) Priorität : 05.03.82 DE 3208037
18.02.83 DE 3305647

(43) Veröffentlichungstag der Anmeldung :
21.09.83 Patentblatt 83/38

(45) Bekanntmachung des Hinweises auf die Patenterteilung : 28.05.86 Patentblatt 86/22

(84) Benannte Vertragsstaaten :
AT BE CH DE FR GB IT LI LU NL SE

(56) Entgegenhaltungen :
DE-A- 2 654 453
DE-A- 2 939 284
US-A- 1 195 546
US-A- 3 177 782

(73) Patentinhaber : **Feldmühle Aktiengesellschaft**
**Fritz-Vomfelde-Platz 4**
**D-4000 Düsseldorf 11 (DE)**

(72) Erfinder : **Wloka, Gerd**
**Bergstrasse 3**
**D-7302 Ostfildern 3 (DE)**

(74) Vertreter : **Uhlmann, Hans, Dr. rer.nat., Dipl.-Chem.**
**Gladbacher Strasse 189**
**D-4060 Viersen 1 (DE)**

**Beschreibung**

Die Erfindung betrifft ein Verdrängerteil einer Kolbenpumpe, insbesondere einer Hochdruckpumpe für abrasive und/oder korrosive Flüssigkeiten, bestehend aus einer Kolbenstange und einem an dieser, mittels einer lösbaren Verbindung befestigten Kolben aus gesintertem, keramischem, insbesondere oxidkeramischem Material, wobei der Kolben als zylindrischer Körper mit einem Sackloch ausgeführt ist, das Aufweitungen aufweist, die Ansätze einer aus dem Sackloch mit ihrem Gewindeteil über die Kolbenfußfläche herausragenden Schraube aufnehmen.

Pumpenkolben, insbesondere solche von Hochdruckpumpen für Waschaggregate, wie sie beispielsweise in der Landwirtschaft zum Abspritzen von Ställen oder zum Reinigen von Maschinen, wie auch im Automobilsektor zum Autoreinigen eingesetzt werden, unterliegen hohen Beanspruchungen. Die Pumpen sind dabei im allgemeinen als Kolbenpumpen ausgeführt, bei denen 2 bis 6 Zylinder auf einer Kurbelwelle arbeiten. Sie erreichen Drücke, die zwischen 80 und 180 bar liegen. Als Reinigungsflüssigkeit werden meist scharfe Alkalien eingesetzt. Die Temperaturen der Reinigungsflüssigkeiten betragen 80 und mehr Grad C. Die bisher als Kolben eingesetzten, beschichteten oder hartverchromten Stahlhülsen wurden über eine Spannschraube mit der Kolbenstange verbunden. Alternativ zu diesen Stahlhülsen hat man entsprechende Hülsen aus gesinterter Oxidkeramik eingesetzt, die analog verbunden waren. Als Metallteil für die Kolbenstange wurde ein nichtrostendes Material, also im allgemeinen ein hochlegierter Stahl verwandt.

Unter keramischen Materialien im Sinne der vorliegenden Anmeldung sollen Sinterkörper aus gesinterten Nitriden, beispielsweise Siliziumnitrid, Boriden, Titanaten, insbesondere jedoch oxidkeramischen Materialien verstanden werden, wie sie als Aluminiumoxidkeramik und Zirkonoxidkeramik am bekanntesten sind.

Alle diese Materialien werden zunächst zu sogenannten Grünkörpern geformt, d. h. unter Zusatz bestimmter Bindemittel als Rohling gepreßt. Bei dem Sintervorgang schrumpfen diese Grünkörper erheblich. Aluminiumoxid, beispielsweise bei Temperaturen oberhalb 1 500 Grad C gesintert, schwindet im Bereich von 18 bis 23 %. Diese Schrumpfung ist in Abhängigkeit von der Gestalt der zu sinternden Materialien nicht überall völlig gleichmäßig, insbesondere dann nicht, wenn unterschiedliche Wandstärken vorhanden sind. Aus diesem Grunde ist es praktisch unmöglich, beispielsweise ein exakt passendes Gewinde für eine Maschinenschraube in einen Oxidsinterkörper direkt einzusintern. Man muß daher so vorgehen, daß das erforderliche Gewinde nachträglich durch Einschleifen mit diamantbestückten Schleifkörpern eingebracht bzw. nachbearbeitet wird. Ein solch aufwendiges Verfahren ist jedoch für einfache Körper, wie ihn ein Pumpenkolben darstellt, aus Preisgründen nicht realisierbar.

Der Stand der Technik sah daher vor, Rohre aus Keramik zu sintern, die an beiden Stirnseiten geschliffen wurden und mittels eines Bolzens auf die Kolbenstange aufgeschraubt werden konnten. Der Nachteil dieser Konstruktion bestand in der komplizierten Abdichtung, ohne die ein Lösen des Kolbens nicht möglich ist, da bei Eintreten von zu pumpender Flüssigkeit in dem Bereich der Verschraubung dieser Bereich korrodierte und damit unlösbar wurde.

Mit dem Einsatz einer Keramikhülse als Kolben konnte bereits weitgehend die Anforderung an die Verschleißfestigkeit und chemische Beständigkeit des Kolbens sowie Lebensdauer der Manschette berücksichtigt werden. Schwierigkeiten ergaben sich jedoch durch die Befestigung dieser Keramikhülse auf der Kolbenstange. In vielen Fällen korrodierte die Schraube oder vertrug sich nicht mit dem Fördermedium, in das sie eintaucht. In allen Fällen war es erforderlich, eine Abdichtung gegenüber der Keramikhülse zu fertigen, die ausgesprochen aufwendig war. Nur durch einen O-Ring mit dahinter angeordnetem Führungsring und einer Kupferscheibe konnte gewährleistet werden, daß die Abdichtung über einen längeren Zeitraum Bestand hatte. Außerdem mußten beide Stirnseiten der Keramikhülse plangeschliffen werden, um ein Zerstören des Kolbens durch beim Verspannen auftretende Biegekräfte zu vermeiden. Die Anordnung des O-Rings für die Dichtung erforderte zusätzlich das Einschleifen einer Fase im Eingriffsbereich des O-Rings in das Keramikrohr, um die Gefahr des Zerquetschens des O-Rings bei der Montage zu verhindern. Das Zerquetschen ergab eine mangelhafte Dichtung, die zur Korrosion innerhalb des Kolbens führte, oder im Saughub den Kolben durch höheren Innendruck zerstörte. Auch durch das Anbringen der Fase wurde die Gefahr, daß ein O-Ring bei schneller Montage zerquetscht wurde, nicht völlig verhindert. Da die Kolben nach einer gewissen Arbeitszeit gelöst werden müssen, um die verschlissenen Dichtmanschetten, die auf diesem Kolben gleiten, auszuwechseln, ist es absolut erforderlich, daß die Verbindung zwischen Kolben und Kolbenstange nicht korrodieren kann, d. h. vom Fördermedium völlig getrennt sein muß.

Aus der DE-A-29 39 284 ist ein Verfahren zum Herstellen von Kolben aus gesinterter Oxidkeramik bekannt, wobei der Kolben beim Pressen des Rohlings mit einem groben Innenrundgewinde versehen wird und in dieses Rundgewinde nach dem Sintern und Schleifen des Kolbens ein mit einem dünneren, groben Rundgewinde versehener Metallrohling eingekittet wird. Nach dem Abbinden des Kittes bzw. Klebers wird der aus dem Kolben hervorstehende Ansatz fertig bearbeitet und mit Gewinde versehen, so daß der Kolben zentrisch verankert werden kann.

Nachteilig bei diesem Verfahren ist, daß sich die eingeklebten Verbindungteile durch ständig pulsierende Zugdruckwechselbelastung aus der Keramik lösen, was darauf zurückzuführen ist, daß der Kleber einmal ermüdet, ferner kann der Kleber nur begrenzt höhere Temperaturen vertragen. Desweiteren ist es möglich, daß durch unzureichendes Entfetten des Rohlings Fehler beim Einbringen des Klebers entstehen, d. h., daß keine Verklebung zwischen Keramikkolben und Rohling auftritt. Darüberhinaus kann die Verbindung bei Pumpen im Reaktorbau oder Bergwerkspumpen nicht angewendet werden, da hier die Vorspannung der Packungen und Dichtmanschetten die Scherfestigkeit von verklebten Verbindungen übersteigt.

Die US-A-1 195 546 beschreibt neben anderen Befestigungsmöglichkeiten das Einbringen eines Metallteils in einen Pumpenkolben aus Glas oder Porzellan. Der Kolben weist eine Ausnehmung auf, die durch Gießen erzeugt wurde. Diese Ausnehmung ist in drei Ebenen mit Kammern versehen, in die ein Bolzen mit in den gleichen Ebenen angeordneten Nocken eingesetzt wird.

Durch Drehen des Bolzens um 90 Grad kommen die hammerkopfartigen Nocken in die Kammern zu liegen und werden durch einen vorher in die Ausnehmung eingebrachten Binder bzw. Zement in ihrer Position fixiert.

Aufgrund der zwangsläufig beim Gießen des Kolbens und der Fertigung der « Hammerkopfschraube » erforderlichen Toleranzen liegt nur ein Hammerkopf mit Sicherheit in den Taschen der Ausnehmung des Kolbens an.

Trotz relativ aufwendiger Konstruktion ist eine einwandfreie Zentrierung zwischen Kolben und Bolzen nicht gewährleistet.

Der Erfindung liegt daher die Aufgabe zugrunde, eine einfache Verbindung zwischen Kolben und Kolbenstange zu finden, die auch beim Einsatz in korrosiven und abrasiven Medien noch nach langer Laufzeit lösbar ist und einen zentrischen Sitz des Kolbens auf der Kolbenstange gewährleistet.

Diese Aufgabe wird gelöst durch die Kombination der in Anspruch 1 angegebenen Merkmale.

Die bereits durch die DE-A-29 39 284 erreichte Lösung, daß nur noch der Keramikkolben als solcher mit dem zu pumpenden Medium in Berührung kommt, wobei, wie immer üblich gewesen, der Kolben durch Manschetten im Zylinderraum abgedichtet wird, damit keine Flüssigkeit nach außen austritt, somit auch keine Flüssigkeit in den Bereich des Kolbenfusses und damit an die Kolbenstange und ihre Verschraubung gelangen kann, wird jetzt noch durch eine einfache und sichere Befestigungsmöglichkeit des Kolbens gegenüber dem älteren Vorschlag verbessert.

Durch die Anordnung einer zylindrischen Aussenkung im Sackloch des Kolbens, die zweckmäßig geschliffen ist, wird ein Paßsitz zwischen Kolbenstange und Kolben erreicht, d. h. der Kolben ist auf der Kolbenstange zentriert.

Hinter der Kreisringfläche ist als einzige Aufweitung durch Hinterdrehen ein Freiraum geschaffen worden.

Die Kreisringfläche weist mindestens eine Ausnehmung auf.

Die im Freiraum des Kolbens befindliche Schraube ragt mit ihrem Gewindeteil über die Kreisringfläche hinaus und ist mittels einer Mutter, die auf die Kreisringfläche wirkt, mit dem Kolben verbunden. Dadurch, daß das Sackloch in gewissem Abstand vom Fuß des Kolbens hinterdreht ist, bildet sich am Kolbenfuß eine ebene Kreisringfläche, die mit einer Ausnehmung versehen ist. Zweckmäßig kann die Kreisringfläche mit zwei Ausnehmungen versehen sein, die sich gegenüber liegen. Dadurch ist es möglich, eine hakenkopfförmige Schraube — bei einer Ausnehmung, die sich vom Sackloch in die Fläche hinein erstreckt — oder eine Hammerkopfschraube — bei zwei sich gegenüberliegenden Ausnehmungen in der Kreisringfläche — in den Freiraum einzusetzen und um einen gewissen Winkel zu verdrehen, so daß der Kopf auf der Rückseite der Kreisringfläche zur Anlage kommt. Das Gewindeteil der Schraube steht dabei über die Kreisringfläche hinaus, so daß mit einer Mutter die Schraube fest mit dem Kolben verbunden werden kann.

Der Schraubenkopf ist dabei auf seiner, der Kreisringfläche zugewandten Seite vorteilhafterweise ballig ausgestaltet, so daß die Schraube durch die auf dem Kolbenkopf aufliegende Mutter ausgerichtet wird.

Gemäß einer bevorzugten Ausgestaltung der Erfindung weisen die Schultern eine Stärke von 10 bis 15 mm auf. Bereits durch die Ausführung mit einer Stärke von 10 mm ist gewährleistet, daß Zugkräfte von 2,5 t und mehr übertragen werden können, d. h., daß das so ausgebildete Verdrängerteil höchsten Belastungen, auch als Hochdruckpumpe, entspricht.

Die Kreisringfläche selbst weist zweckmäßig eine Breite von 4 bis 7 mm auf und ist damit relativ schmal. Sie dient zur Aufnahme der Mutter, die gemäß einer bevorzugten Ausgestaltung der Erfindung als Ringmutter ausgeführt ist und die Führung der Schraube, die zweckmäßig als Hammerkopfschraube mit balliger Unterseite ausgebildet ist, übernimmt. Durch die Kreisringfläche erfolgt dabei ein axiales Ausrichten der Schraube, durch die Ringmutter, die in der Aussenkung des Kolbens geführt wird, das radiale Ausrichten.

Nach dem Einsetzen der Schraube, die bevorzugt als Hammerkopfschraube ausgeführt ist, in den Kolben muß diese ausgerichtet werden, d. h. die Hammerkopfflächen müssen so gedreht werden, daß sie ungefähr in der Mitte des rückseitigen Teils der Kreisringfläche zum Anliegen kommen. Für die Positionierung der Schraube ist die Schraube mit einem Schlitz versehen, in den ein Schraubendreher eingeführt werden kann und mit dem sie während des Anziehens der Ringmutter gehalten wird.

Die Erfindung wird nachstehend anhand der Zeichnungen näher erläutert.

Die Figuren 1 bis 3 zeigen den Stand der Technik,

Figur 4 das komplette, erfindungsgemäße Verdrängerteil im Teilschnitt,

Figur 5 eine Schnittansicht gemäß Ebene V-V in Fig. 4,

Figur 6 in perspektivischer Explosionsdarstellung und im teilweisen Schnittaufbruch die einzelnen Bauteile.

Der Kolben 2 ist mit einem Sackloch 3 versehen, das im Bereich des Kolbenkopfes eine zylindrische Aussenkung 6 aufweist. Die zylindrische Aussenkung 6 wird durch die Kreisringfläche 12 in ihrer Tiefe begrenzt, hinter welcher der Freiraum 13 angeordnet ist. Die Schraube 16 wird bei der Montage des Kolbens 2 durch die Ausnehmungen 14', 14", die an das Sackloch 3 angrenzen, mit ihrem Kopf 15 in den Freiraum 13 geführt und hier um 90 Grad gedreht. Der Kopf 15 der Schraube 16 liegt damit an der Unterseite der Schultern 27 an, die durch die Ausnehmungen 14', 14" in die beiden Segmentflächen 28 geteilt ist. Durch Aufschrauben der Mutter 8 auf den Gewindeteil 17 der Schraube 16 wird der Kopf 15 an die Segmentflächen 28 angepreßt. Da die unteren, den Segmentflächen 28 zugewandten Kopfflächen 29 des Schraubenkopfes 15 ballig ausgeführt sind, wird die genaue Lage des Gewindeteils 17 der Schraube 16 durch die Mutter 8, die als Ringmutter ausgeführt ist, bestimmt. Die Mutter 8 ist dabei in der Aussenkung 6 radial geführt, wodurch die Zentrierung der Schraube 16 erfolgt. Das Ausrichten der Schraube 16 erfolgt durch das Anliegen der Mutter 8 an der Kreisringfläche 12, also dem Boden der Aussenkung 6.

Die Höhe der Mutter 8 ist so gewählt, daß sie völlig in der zylindrischen Aussenkung 6 verschwindet, d. h., daß die Kolbenfussfläche 18 im eingebauten Zustand der Schraube 16 die Mutter 8 geringfügig überragt. Um die Schraube 16 in der gewählten Position zu halten und während der Montage gegen Verdrehung zu sichern, ist im oberen Bereich des Gewindeteils 17 der Schraube 16 ein Schlitz 22 eingebracht, der bei der Montage der Schraube 16 im Kolben 2 zur Aufnahme einer Schraubendreherschneide dient. Die als Ringmutter ausgeführte Mutter 8 ist mit zwei Bohrungen 21 versehen, die beim Anziehen der Mutter mit einem Stiftschlüssel die Stifte aufnehmen. Das Gewindeteil 17 steht über die Kolbenfussfläche 18 hinaus und greift in die Kolbenstange 1 ein.

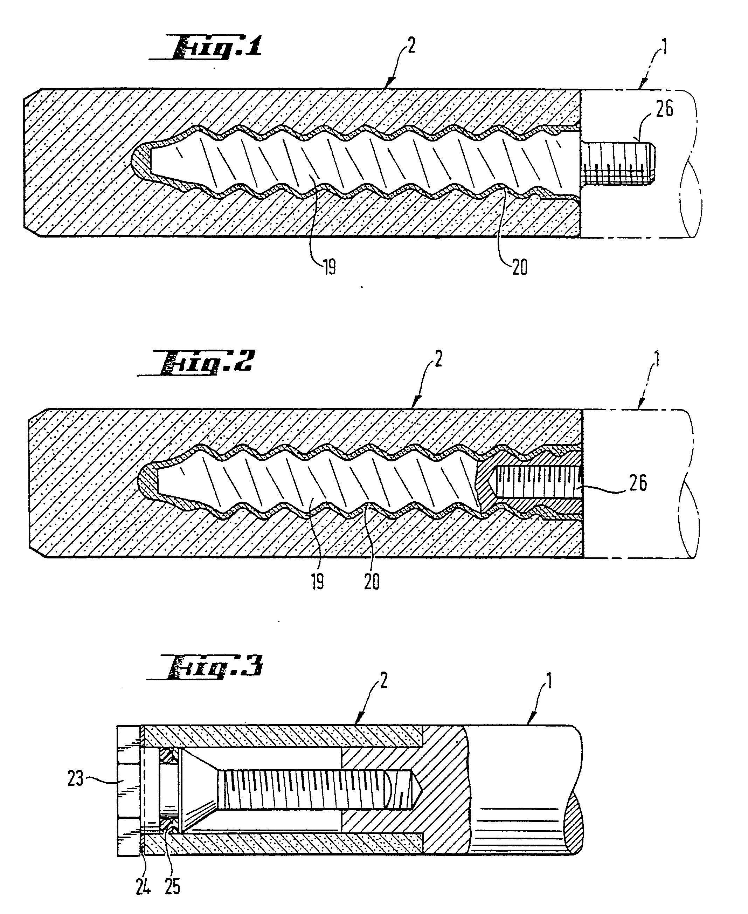

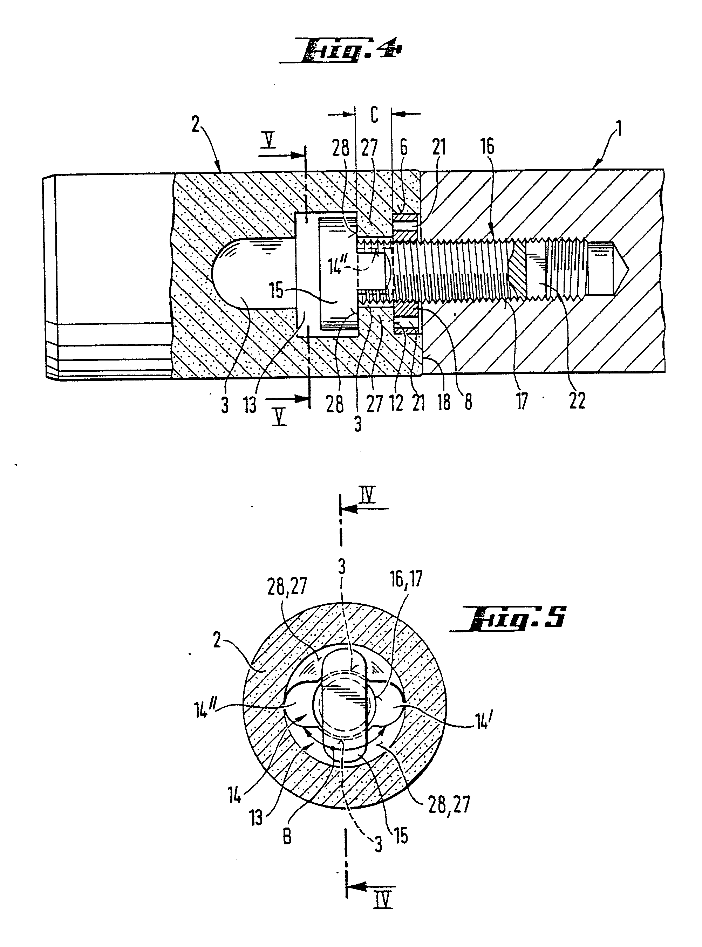

Wie in den Figuren 1 bis 3 dargestellt, unterscheidet sich der Stand der Technik erheblich vom Anmeldegegenstand. In den Figuren 1 und 2 ist in den Kolben 2 ein Rundgewindestück 19 mittels Kitt 20 eingebracht, wobei dieses Rundgewindestück 19 im Anschluß an das Einkitten mit einem Gewinde 26 zur Aufnahme der Kolbenstange 1 versehen wurde. Das Gewinde 26 kann dabei, wie Figur 1 zeigt, als Außengewinde oder, wie Figur 2 zeigt, als Innengewinde 26 ausgeführt sein.

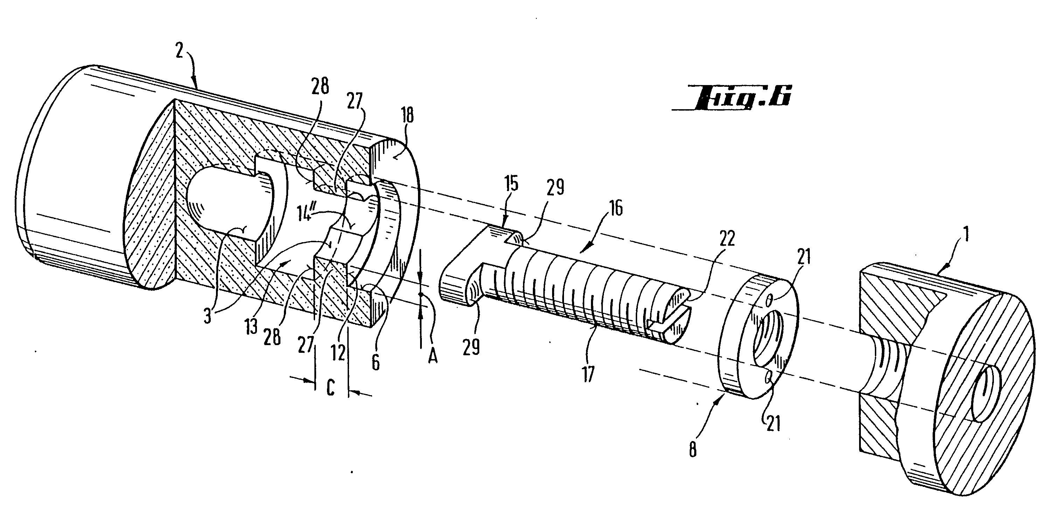

Figur 3 zeigt die Ausführung des Kolbens 2 als Kolbenhülse, die über einen Ansatz an der Kolbenstange 1 angeordnet ist und durch eine Sechskantschraube 23, die eine Ausgleichscheibe 24 und einen O-Ring 25 trägt, mit der Kolbenstange 1 fest verbunden wird. Der O-Ring 25 dient dabei der Abdichtung des Kolbens 2, d. h., er soll das Eindringen der Förderflüssigkeit in den Innenraum des Kolbens 2 verhindern.

Eine Variante des Erfindungsgegenstandes ist Gegenstand der Teilanmeldung Nr. 83110152.2 mit der Veröffentlichungsnummer 0 103 906.

**Patentansprüche**

1. Verdrängerteil einer Kolbenpumpe, insbesondere einer Hochdruckpumpe für abrasive und/oder korrosive Flüssigkeiten, bestehend aus einer Kolbenstange (1) und einem, an dieser mittels einer lösbaren Verbindung befestigten Kolben aus gesintertem, keramischem, insbesondere oxidkeramischem Material, wobei der Kolben als zylindrischer Körper mit einem Sackloch (3) ausgeführt ist, das Aufweitungen aufweist, die Ansätze einer aus dem Sackloch mit ihrem Gewindeteil über die Kolbenfussfläche herausragenden Schraube aufnehmen, gekennzeichnet durch die Kombination folgender Merkmale :

das Sackloch (3) im Kolben (2) ist von einer zylindrischen Aussenkung (6) umgeben, die zylindrische Aussenkung (6) bildet eine ebene Kreisringfläche (12), hinter der Kreisringfläche (12) ist als einzige Aufweitung durch Hinterdrehen ein Freiraum (13) geschaffen, die Kreisringfläche (12) weist mindestens eine Ausnehmung (14) auf, die sich mit ihrem Kopf (15) im Freiraum (13) des Kolbens (2) befindliche Schraube (16) ragt mit ihrem Gewindeteil (17) über die Kreisringfläche (12) hinaus und ist mittels einer Ringmutter (8), die auf die Kreisringfläche (12) wirkt, mit dem Kolben (2) verbunden.

2. Verdrängerteil nach Anspruch 1, dadurch gekennzeichnet, daß die Schulter (27) hinter der Kreisringfläche (12) eine Stärke C von 10 bis 15 mm aufweist.

3. Verdrängerteil nach einem der Ansprüche 1 und 2, dadurch gekennzeichnet, daß die Kreisringfläche (12) eine Breite A von 4 bis 7 mm aufweist.

4. Verdrängerteil nach einem der Ansprüche 1 bis 3, dadurch gekennzeichnet, daß die Schraube (16) als Hammerkopfschraube ausgeführt ist.

5. Verdrängerteil nach einem der Ansprüche 1 bis 4, dadurch gekennzeichnet, daß die Schraube (16) mit einem Schlitz (22) zu ihrer Positionierung versehen ist.

6. Verdrängerteil nach einem der Ansprüche 1 bis 5, dadurch gekennzeichnet, daß die Unterseite (29) des Hammerkopfes der Schraube (16) ballig ausgeführt ist.

## Claims

1. Displacement component of a piston pump, especially a high-pressure pump for abrasive and/or corrosive liquids, comprising a piston rod (1) and a piston made of sintered, ceramic material, especially oxide-ceramic material, that is secured to the rod by means of a detachable connection, the piston being designed as a cylindrical body having a blind hole (3) which has widened portions that accommodate the projections of a screw, the threaded portion of which projects out of the blind hole to beyond the base surface of the piston, characterised by the following combination of features :
the blind hole (3) in the piston (2) is surrounded by a cylindrical countersunk portion (6), the cylindrical countersunk portion (6) forms a plane annular surface (12), behind the annular surface (12) there is created as the only widened portion, by means of recessing, a space (13), the annular surface (12) has at least one recess (14), the threaded portion (17) of the screw (16), the head (15) of which is in the space (13) in the piston (2), projects beyond the annular surface (12) and is connected to the piston (2) by means of a ring nut (8) which acts on the annular surface (12).

2. Displacement component according to claim 1, characterised in that the shoulder (27) behind the annular surface (12) has a thickness C of from 10 to 15 mm.

3. Displacement component according to claim 1 or 2, characterised in that the annular surface (12) has a width A of from 4 to 7 mm.

4. Displacement component according to any one of claims 1 to 3, characterised in that the screw (16) is designed as a hammer-head screw.

5. Displacement component according to any one of claims 1 to 4, characterised in that the screw (16) is provided with a slot (22) for positioning it.

6. Displacement component according to any one of claims 1 to 5, characterised in that the underside (29) of the hammer head of the screw (16) is convex.

## Revendications

1. Organe de déplacement d'une pompe à piston, en particulier d'une pompe à haute pression pour liquides abrasifs et/ou corrosifs, constitué par une tige (1) de piston et par un piston en matériau céramique, en particulier oxycéramique, fritté, fixé à la tige par un raccord démontable, le piston étant réalisé sous forme de corps cylindrique pourvu d'un trou borgne (3) qui présente des élargissements recevant des appendices d'une vis dont la partie filetée fait saillie hors du trou borgne au-delà de la surface de base du piston, caractérisé par la combinaison des caractéristiques suivantes :
le trou borgne (3) du piston (2) est entouré par un lamage (6) cylindrique, le lamage (6) cylindrique forme une surface en couronne circulaire (12) plane, derrière la surface en couronne circulaire (12) est aménagé par chambrage un espace libre (13) sous forme d'élargissement unique, la surface en couronne circulaire (12) présente au moins une échancrure (14), la partie filetée (17) de la vis (16) dont la tête (15) se trouve dans l'espace libre (13) du piston (2) fait saillie au-delà de la surface en couronne circulaire (12) et est assemblée au piston (2) au moyen d'un écrou annulaire (8) qui vient s'appliquer sur la surface en couronne circulaire (12).

2. Organe de déplacement selon la Revendication 1, caractérisé par le fait que l'épaulement (27) prévu derrière la surface en couronne circulaire (12) présente une épaisseur C de 10 à 15 mm.

3. Organe de déplacement selon l'une des Revendications 1 et 2, caractérisé par le fait que la surface en couronne circulaire (12) présente une largeur A de 4 à 7 mm.

4. Organe de déplacement selon l'une des Revendications 1 à 3, caractérisé par le fait que la vis (16) est agencée en tant que vis à tête de marteau.

5. Organe de déplacement selon l'une des Revendications 1 à 4, caractérisé par le fait que la vis (16) est pourvue d'une fente (22) pour son positionnement.

6. Organe de déplacement selon l'une des Revendications 1 à 5, caractérisé par le fait que la face de dessous de la tête de marteau de la vis (16) est bombée.

**Fig.1**

2

1

26

19

20

**Fig.2**

2

1

26

19 20

**Fig.3**

2

1

23

24 25

Fig.4

Fig.5

*Fig.6*

3